# EUROPEAN PATENT APPLICATION

(11) **EP 4 173 841 A1**
(43) Date of publication of application: **03.05.2023**
(21) Application number: 22195545.3
(22) Date of filing: 14.09.2022
(51) Int. Cl.: B60B 1/02, B60B 1/04, B60B 7/00

(54) **WIRE-SPOKE WHEEL**

(30) Priority: 27.10.2021 JP 2021175439
(71) Applicant: Yamaha Hatsudoki Kabushiki Kaisha, Iwata-shi, Shizuoka 438-8501 (JP)
(72) Inventor: NIIMI, Hiroshi, Iwata-shi, 438-8501 (JP); YAMAGUCHI, Masaya, Iwata-shi, 438-8501 (JP)
(74) Representative: Studio Torta S.p.A.

(57) **Abstract**

The wire-spoke wheel **(100)** includes: an annular rim **(10);** a hub **(20, 20'**) including a hole **(20a)** in which a wheel shaft is inserted; a plurality of wire spokes **(30)** linking the rim and the hub together, each including a first end **(30a)** that is connected to the rim and a second end **(30b)** connected to the hub; a plurality of nipples **(40)** respectively fastening the respective second ends of the plurality of wire spokes to the hub; and a cover member **(50)** being attached to the hub and covering a head or heads **(42)** of at least a part of the plurality of nipples.

## Description

The present disclosure relates to a wire-spoke wheel.

As a type of wheels for use in motorcycles and other vehicles, wire-spoke wheels are known in which a rim and a hub are linked by a plurality of wire spokes. Wire-spoke wheels have the advantage of good shock absorption.

A wire-spoke wheel is disclosed in Japanese Laid-Open Patent Publication No. 2012-232658 (hereinafter "Patent Document 1"), for example. In the wire-spoke wheel disclosed in Patent Document 1, a head at one end of each wire spoke is secured at the hub side, while a threaded portion at the other end of the wire spoke is fastened at the rim side by a nipple.

Contrary to the configuration disclosed in Patent Document 1, a configuration may be possible in which the head of each wire spoke is secured to the rim side and the threaded portion of each wire spoke is fastened to the hub side by a nipple. In such a configuration, however, vibration during travel and the like may loosen the nipple, allowing it to fall off the wheel.

The present disclosure has been made in view of the above problem, and an objective thereof is, in a wire-spoke wheel having a configuration in which one end of each wire spoke is fastened to the hub side by a nipple, to prevent the nipple from falling off.

The present specification discloses wire-spoke wheels as recited in the following Claims.

### [Claim 1]

A wire-spoke wheel comprising:
an annular rim;
a hub having a hole in which a wheel shaft is inserted;
a plurality of wire spokes linking the rim and the hub together, the plurality of wire spokes each including a first end that is connected to the rim and a second end that is connected to the hub;
a plurality of nipples respectively fastening the respective second ends of the plurality of wire spokes to the hub; and
a cover member being attached to the hub and covering a head or heads of at least a part of the plurality of nipples.

In a wire-spoke wheel according to an embodiment of the present invention, the hub-end (second end) of each wire spoke is fastened to the hub via the nipple. Because the wire-spoke wheel according to an embodiment of the present invention includes the cover member being attached to the hub and covering the heads of the nipples, the nipples are unlikely to fall off even when the nipples become loose. Moreover, the cover member being attached to the hub can provide for improved design.

### [Claim 2]

The wire-spoke wheel of Claims 1, wherein an interval between the cover member and a head of the nipple or each of the nipples covered by the cover member is set so that engagement between the nipple and the corresponding wire spoke is not lost.

Because the interval between the cover member and the head of nipple is set so that the engagement between the nipple and the wire spoke is not lost, it is even less likely for the nipples to fall off. The interval between the cover member and the head of the nipple may be zero, that is, the cover member may be in contact with the head of the nipple.

### [Claim 3]

The wire-spoke wheel of Claims 1 or 2, wherein,
in a plan view as viewed along a wheel axis direction, regarding each wire spoke,
an imaginary line connecting the first end of the wire spoke and a center of the hole defines a first imaginary line; an imaginary line being orthogonal to the first imaginary line and passing through a center of the hole defines a second imaginary line; and when the hub is divided into two regions by the second imaginary line, one of the two regions that is located closer to the first end of the wire spoke defines a first region and the other of the two regions defines a second region, wherein
the second end of the wire spoke is connected to the hub in the second region of the hub.

A wire-spoke wheel according to an embodiment of the present invention may have a configuration that allows the wire spokes to be longer than conventional. Specifically, in a plan view as viewed along a wheel axis direction, the following may be assumed regarding each wire spoke: an imaginary line connecting the rim-end (first end) of the wire spoke and the center of the hole (wheel-shaft insertion hole) in the hub defines a first imaginary line; an imaginary line being orthogonal to the first imaginary line and passing through a center of the hole defines a second imaginary line; and the second imaginary line divides the hub into two regions. Herein, assuming that one of the two regions that is located closer to the first end of the wire spoke defines a first region and that the other region defines a second region, the hub-end (second end) of the wire spoke may be connected to the hub in the second region of the hub.

Because of the wire-spoke wheel having such a configuration (i.e., each wire spoke is disposed so as to extend from the rim to the hub and beyond the second imaginary line), the wire spokes can be made longer than conventional, whereby energy absorption by the wire spokes increases, thus resulting in an improved shock absorption. Therefore, a straddled vehicle including a wire-spoke wheel with such a configuration provides better riding comfort on poor terrain and uneven road surfaces. As energy absorption increases, the input occurring at the fastening site of each wire spoke decreases, which reduces loosening of the fastening site and reduces the frequency of maintenance.

### [Claim 4]

The wire-spoke wheel of Claim 3, wherein each of the plurality of wire spokes has a length which is 60% or more of the rim diameter.

When the length of each wire spoke is 60% or more of the rim diameter, a sufficiently high shock absorption can be obtained.

### [Claim 5]

The wire-spoke wheel of Claims 3 or 4, wherein,
the hub includes an inner cylindrical portion defining the hole, an outer cylindrical portion being located outward of the inner cylindrical portion along a wheel radius direction and surrounding the inner cylindrical portion, and an interconnecting portion connecting the inner cylindrical portion and the outer cylindrical portion; and
each of the plurality of wire spokes penetrates an interior of the hub from a portion to another portion of the outer cylindrical portion of the hub, and is fastened to the hub at the other portion.

Given the structure of the hub which includes the inner cylindrical portion and the outer cylindrical portion, adopting the configuration where, e.g., each wire spoke penetrates the interior of the hub from a portion to another portion of the outer cylindrical portion of the hub allows the hub-end (second end) of the wire spoke to be connected to the hub in the second region.

### [Claim 6]

The wire-spoke wheel of Claims 5, wherein the cover member is an annular band, and is attached to an outer peripheral surface of the outer cylindrical portion of the hub.

When adopting a configuration where each wire spoke penetrates the interior of the hub, the cover member may be an annular band, for example, which may be attached to the outer peripheral surface of the outer cylindrical portion of the hub.

### [Claim 7]

The wire-spoke wheel of Claims 3 or 4, wherein,
the hub includes an inner cylindrical portion defining the hole and a flange portion extending outward along a wheel radius direction from the inner cylindrical portion;
the flange portion includes an outer peripheral subportion, and an inner subportion that is located inward of the outer peripheral subportion along the wheel radius direction; and
the second end or ends of at least a part of the plurality of wire spokes is or are connected to the hub in the inner subportion of the flange portion.

Given the structure of the hub which includes the inner cylindrical portion and the flange portion, adopting the configuration where, e.g., the second end of each wire spoke is connected to the hub at the inner subportion of the flange portion allows the hub-end (second end) of the wire spoke to be connected to the hub in the second region.

### [Claim 8]

The wire-spoke wheel of Claim 7, wherein the cover member has a disk shape, and is attached to the flange portion of the hub.

When the wire spokes are fastened to the hub at the flange portion, the cover member may have a disk shape, for example, which is attached to the flange portion of the hub.

### [Claim 9]

The wire-spoke wheel of any of Claimss 1 to 8, wherein the cover member is made of a rubber or a resin material.

As the material of the cover member, a rubber or a resin material can be suitably used, for example.

According to an embodiment of the present invention, in a wire-spoke wheel having a configuration in which one end of each wire spoke is fastened to the hub side by a nipple, the nipple can be prevented from falling off.
FIG. **1** is a perspective view schematically showing a wire-spoke wheel **100** according to an embodiment of the present invention.
FIG. **2** is a side view schematically showing the wire-spoke wheel **100.**
FIG. **3** is a cross-sectional view schematically showing the wire-spoke wheel **100,** illustrating a cross section parallel to a wheel axis direction **D1** and a wheel radius direction **D2.**
FIG. **4** is a plan view schematically showing a wire spoke **30.**
FIG. **5** is a plan view schematically showing a nipple **40.**
FIG. **6** is a perspective view schematically showing the wire-spoke wheel **100,** from which cover members **50** have been removed.
FIG. **7** is a perspective view schematically showing a cover member **50.**
FIG. **8** is a side view schematically showing the wire-spoke wheel **100.**
FIG. **9** is a cross-sectional view schematically showing the neighborhood of a spoke connection site **22b.**
FIG. **10** is a graph showing a relationship (load-displacement curve) between the load acting on each wire spoke and the displacement of the wire spoke, with respect to Examples 1 and 2.
FIG. **11** is a diagram describing how a wire spoke **30** may move toward the outer side along the wheel radius direction **D2.**
FIG. **12** is a side view schematically showing another wire-spoke wheel **200** according to an embodiment of the present invention.
FIG. **13** is a side view schematically showing the wire-spoke wheel **200,** from which cover members **50'** have been removed.
FIG. **14** is a cross-sectional view schematically showing the wire-spoke wheel **200,** from which the cover members **50'** have been removed, illustrating a cross section parallel to the wheel axis direction **D1** and the wheel radius direction **D2.**
FIG. **15** is a side view showing the neighborhood of a hub **20'** of the wire-spoke wheel **200.**
FIG. **16** is a cross-sectional view along line **16A-16A'** in FIG. **15****.**
FIG. **17** is a cross-sectional view along line **17A-17A'** in FIG. **15****.**
FIG. **18** is a side view schematically showing the wire-spoke wheel **200.**

Hereinafter, with reference to the drawings, embodiments of the present invention will be described. Note that the present invention is not limited to the following embodiments.

### (Embodiment 1)

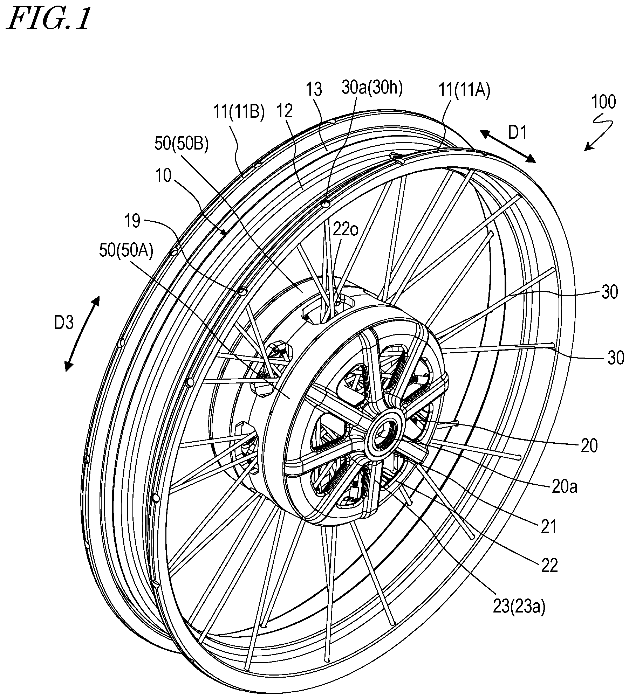

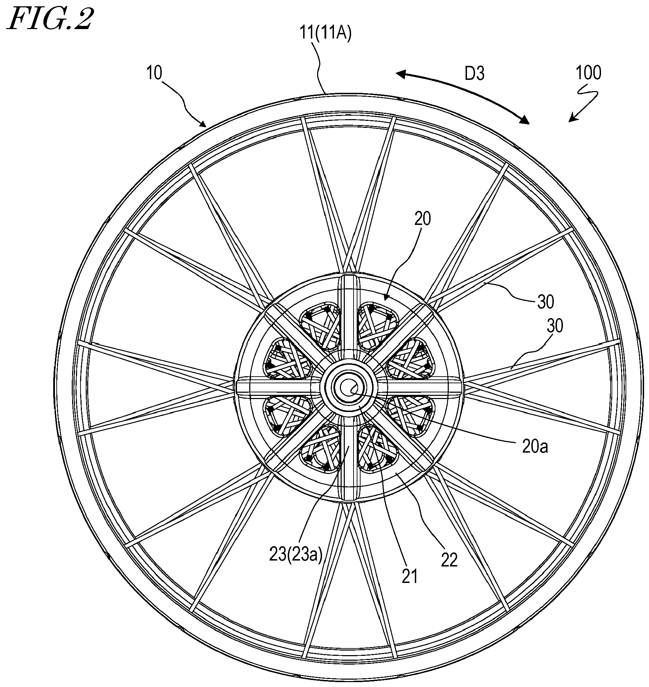

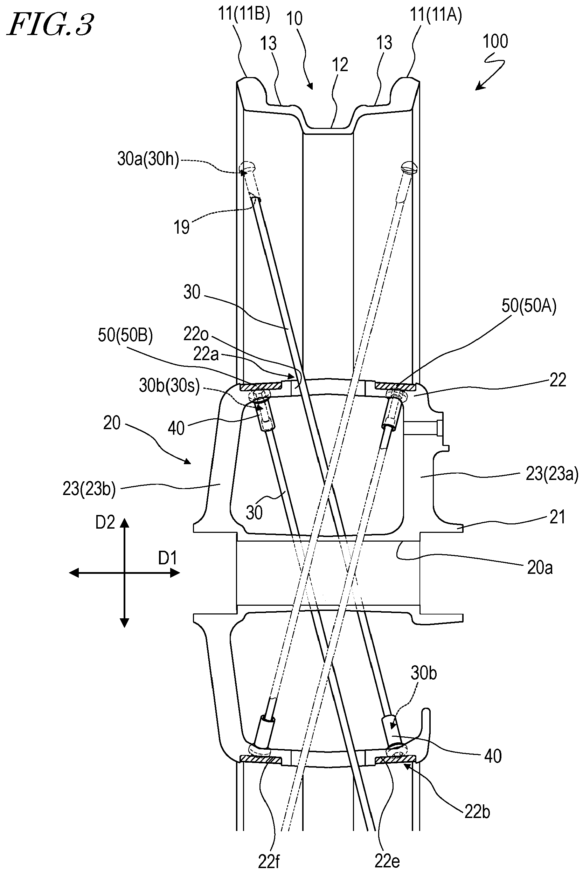

With reference to FIG. **1****,** FIG. **2****,** and FIG. **3****,** a wire-spoke wheel (hereinafter simply referred to as a "wheel") **100** according to the present embodiment will be described. FIG. **1** and FIG. **2** are a perspective view and a side view, respectively, schematically showing the wheel **100.** FIG. **3** is a cross-sectional view schematically showing the wheel **100,** illustrating a cross section that is parallel to a wheel axis direction **D1** and a wheel radius direction **D2.** In the following, for convenience of description, one side along the wheel axis direction **D1** (the right side in FIG. **3****)** will be regarded as the right side, whereas the other side (the left side in FIG. **3****)** will be regarded as the left side.

As shown in FIG. **1****,** FIG. **2****,** and FIG. **3****,** the wheel **100** includes a rim **10,** a hub **20,** and a plurality of wire spokes **30.**

The rim **10** has an annular shape, extending in a wheel circumference direction **D3.** A tire is mounted on the rim **10.** The rim **10** is made of a metal material (e.g., an aluminum alloy) . The rim **10** includes a pair of flange portions **11,** a well portion **12,** and a pair of bead seat portions **13.**

The pair of flange portions **11** are located at both ends of the wheel axis direction **D1** of the rim **10.** Regarding the pair of flange portions **11,** a flange portion **11A** that is located on the right side of the rim **10** will be referred to as the "right flange portion", whereas a flange portion **11B** that is located on the left side of the rim **10** will be referred to as the "left flange portion". The right flange portion **11A** and the left flange portion **11B** each extend outward along the wheel radius direction **D2.**

The well portion **12** is located in the middle of the wheel axis direction **D1** of the rim **10.** The well portion **12** is dented inward along the wheel radius direction **D2.**

The bead seat portions **13** are located between the right flange portion **11A** and the well portion **12,** and between the left flange portion **11A** and the well portion **12.** The bead seat portions **13** are portions that support bead portions of the tire.

The hub **20** is located in the center of the wheel **100.** The hub **20** includes a hole (wheel-shaft insertion hole) **20a** through which a wheel shaft is inserted. A direction that is parallel to the center axis of the wheel-shaft insertion hole **20a** is the wheel axis direction **D1.** The hub **20** is made of a metal material (e.g., an aluminum alloy).

In the present embodiment, the hub **20** includes an inner cylindrical portion **21,** an outer cylindrical portion **22,** and an interconnecting portion **23.** The inner cylindrical portion **21** is a barrel-shaped portion defining the wheel-shaft insertion hole **20a.** The outer cylindrical portion **22** is a barrel-shaped portion being located outward of the inner cylindrical portion **21** along the wheel radius direction **D2** and surrounding the inner cylindrical portion **21.**

The interconnecting portion **23** is a portion that connects the inner cylindrical portion **21** with the outer cylindrical portion **22.** The interconnecting portion **23** includes a right interconnecting portion **23a** that is located on the right side of the hub **20** and a left interconnecting portion **23b** that is located on the left side of the hub **20.** The right interconnecting portion **23a** extends radially from the right end of the inner cylindrical portion **21** to the right end of the outer cylindrical portion **22.** The left interconnecting portion **23b** extends radially from the left end of the inner cylindrical portion **21** to the left end of the outer cylindrical portion **22.** Note that the shape of the interconnecting portion **23** is not limited to the illustrated example. For example, the right interconnecting portion **23a** and the left interconnecting portion **23b** may each be shaped as a disk.

The region of the hub **20** that is surrounded by the inner cylindrical portion **21,** the outer cylindrical portion **22,** and the interconnecting portion **23** is a hollow space. In other words, the hub **20** has a hollow structure.

The plurality of wire spokes **30** link the rim **10** and the hub **20** together. The wire spokes **30** are made of a metal material (e.g., iron). In the illustrated example, the wheel **100** includes 32 wire spokes **30;** however, the number of wire spokes **30** is of course not limited thereto. In the present specification, regarding both ends of each wire spoke **30,** an end **30a** that is connected to the rim **10** will be referred to as the "first end" or the "rim-end", whereas an end **30b** that is connected to the hub **20** will be referred to as the "second end" or the "hub-end".

As shown in FIG. **3****,** the wheel **100** further includes a plurality of nipples **40** respectively fastening the respective hub-ends **30b** of the wire spokes **30** to the hub **20.**

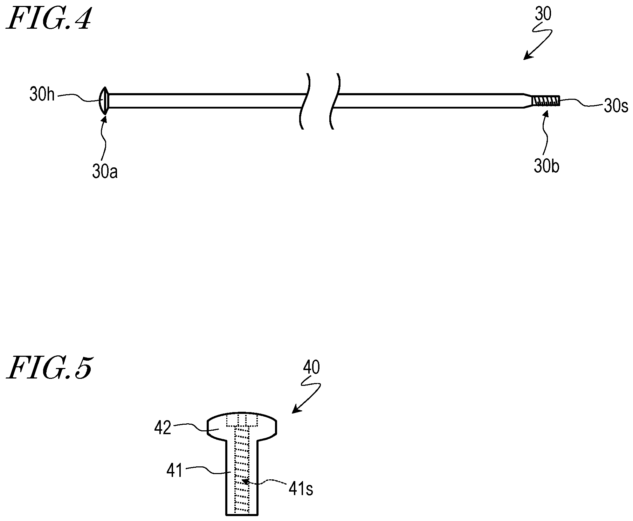

FIG. **4** and FIG. **5** are plan views showing a wire spoke **30** and a nipple **40,** respectively. As shown in FIG. **4****,** a spoke head **30h** with an increased diameter is formed at the rim-end **30a** of the wire spoke **30,** whereas an external thread **30s** is formed at the hub-end **30b.**

As shown in FIG. **5****,** the nipple **40** includes a stem **41** and a head **42** that is provided at one end of the stem **41.** The stem **41** has a barrel shape, with an internal thread **41s** being formed on the inner peripheral surface of the stem **41.**

As shown in FIG. **1** and FIG. **3****,** the flange portions **11** of the rim **10** include spoke holes **19** through which the wire spokes **30** can be inserted, such that the rim-ends **30a** of the wire spokes **30** are secured to the corresponding flange portions **11** of the rim **10** via the spoke heads **30h.** The hub-ends **30b** of the wire spokes **30** are fastened to the outer cylindrical portion **22** of the hub **20** as their external threads **30s** are screwed onto the internal threads **41s** of the nipples **40.**

The wheel **100** according to the present embodiment further includes at least one (e.g., two in the illustrated example) cover member(s) **50** being attached to the hub **20.** In the following description, regarding the two cover members **50,** a cover member **50A** that is located on the right side may be referred to as the right cover member, whereas a cover member **50B** that is located on the left side may be referred to as the left cover member.

The right cover member **50A** covers the heads **42** of some of the plurality of nipples **40** (specifically, a half of the nipples **40).** On the other hand, the left cover member **50B** covers the heads **42** of the other nipples **40.**

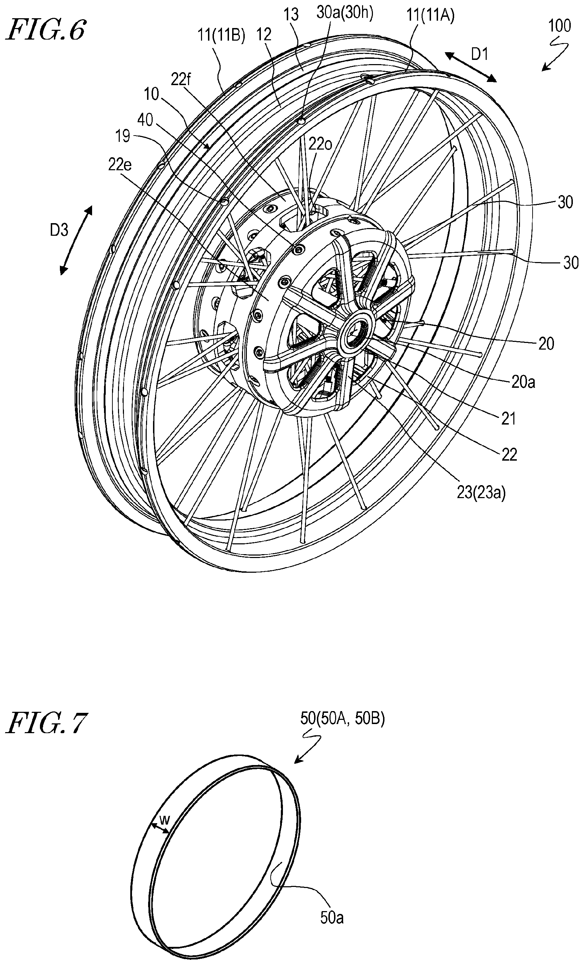

FIG. **6** is a perspective view showing the wheel **100,** from which the cover members **50** have been removed. FIG. **7** is a perspective view schematically showing a cover member **50.**

As shown in FIG. **7****,** the cover member (s) **50** is an annular band(s). The cover member(s) **50** is made of a rubber or a resin material, for example.

The cover members **50** are attached to the outer peripheral surface of the outer cylindrical portion **22** of the hub **20.** In the present embodiment, as shown in FIG. **6****,** a pair of grooves **22e** and **22f** extending along the wheel circumference direction **D3** are formed on the outer peripheral surface of the outer cylindrical portion **22.** The cover members **50** are fitted in the grooves **22e** and **22f.** More specifically, the right cover member **50A** is fitted in the right groove **22e,** whereas the left cover member **50B** is fitted in the left groove **22f.**

As mentioned above, in the wheel **100** according to the present embodiment, the hub-ends **30b** of the wire spokes **30** are fastened to the hub **20** via the nipples **40.** Because the wheel **100** according to the present embodiment includes the cover members **50,** which cover the heads **42** of the nipples **40** by being attached to the hub **20,** the nipples **40** are unlikely to fall off even when the nipples **40** become loose.

Moreover, the cover member(s) **50** being attached to the hub **20** can provide for improved design. The specific shape of the cover member(s) **50** is not limited to what is illustrated in FIG. **7****,** and there is no particular limitation as to the width, thickness, etc., of the cover member(s) **50.** For example, although FIG. **7** illustrates an example where the cover member(s) **50** has a constant (identical) width **w** across the entire cover member(s) **50,** the width **w** of the cover member(s) **50** does not need to be constant.

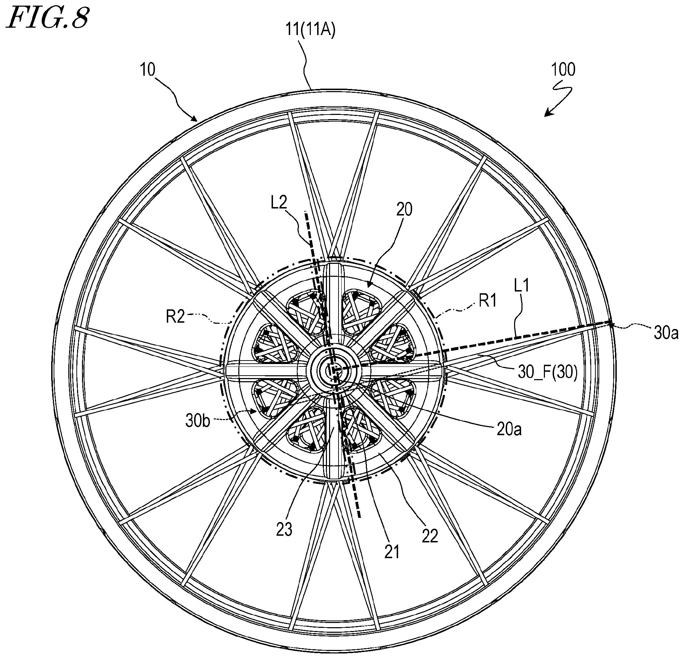

Moreover, the wheel **100** according to the present embodiment has a configuration that allows the wire spokes **30** to be longer than conventional. Hereinafter, this configuration will be specifically described. In the following description, each wire spoke **30** will be discussed in a plan view as viewed along the wheel axis direction **D1.** FIG. **8** shows a side of the wheel **100** in a plan view drawn with particular attention to a certain wire spoke **30** (i.e., a wire spoke denoted as **"30_F"** in FIG. **8****).**

Now, the following is assumed: an imaginary line **L1** connecting the rim-end (first end) **30a** of the wire spoke **30** and the center of the wheel-shaft insertion hole **20a** defines a "first imaginary line"; an imaginary line **L2** being orthogonal to the first imaginary line **L1** and passing through the center of the wheel-shaft insertion hole **20a** defines a "second imaginary line"; and the second imaginary line **L2** divides the hub **20** into two regions **R1** and **R2.** Herein, one **R1** of the two regions **R1** and **R2** that is located closer to the rim-end (first end) **30a** of the wire spoke **30** defines a "first region", while the other region **R2** defines a "second region".

As shown in FIG. **8****,** in the wheel **100** according to the present embodiment, the hub-end (second end) **30b** of the wire spoke **30** is connected to the hub **20** in the second region **R2** of the hub **20.** More specifically, as shown in FIG. **3****,** the wire spoke **30** penetrates the interior of the hub **20** from a portion (hereinafter referred to as a "spoke introduction site") **22a** to another portion (hereinafter referred to as a "spoke connection site") **22b** of the outer cylindrical portion **22** of the hub **20.**

At the spoke introduction sites **22a** of the outer cylindrical portion **22,** openings **22o** through which the wire spokes **30** are passed are formed. The openings **22o** are located in substantially the middle of the outer cylindrical portion **22** of the hub **20** along the wheel axis direction **D1.** Therefore, it can be said that the rim-ends **30a** of the wire spokes **30** are located outward of the openings **22o** along the wheel axis direction **D1.** Although four wire spokes **30** are passed through one opening **22o** in the illustrated example, the relationship between the number of openings **22o** and the number of wire spokes **30** is not limited thereto. The shape of each opening **22o** is not limited to the illustrated example, either.

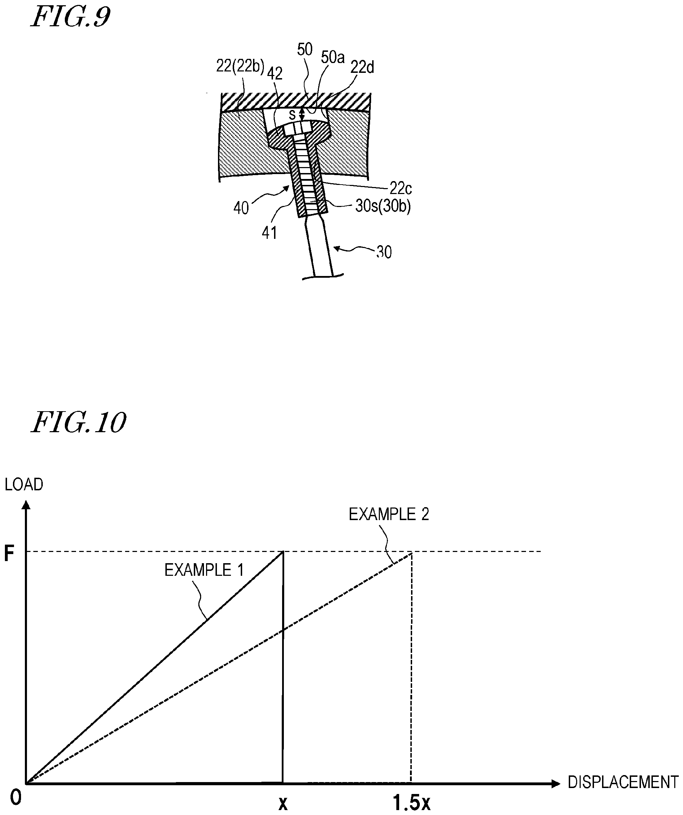

At each spoke connection site **22b** of the outer cylindrical portion **22,** the hub-end **30b** of the wire spoke **30** is connected to the hub **20.** FIG. **9** is a cross-sectional view showing the neighborhood of a spoke connection site **22b.** As shown in FIG. **9****,** a nipple hole **22c,** through which the stem **41** of the nipple **40** is inserted, and a recess **22d,** which is continuous with the nipple hole **22c** and in which the head **42** of the nipple **40** is accommodated, are formed at the spoke connection site **22b.**

In the present embodiment, the spoke connection site **22b** corresponding to each wire spoke **30** is located in the groove **22e** or **22f** formed in the outer peripheral surface of the outer cylindrical portion **22.** A half of the plurality of wire spokes **30** have their rim-ends **30a** connected to the right flange portion **11A** and their hub-ends **30b** connected to a spoke connection site **22b** in the left groove **22f.** The other half of the wire spokes **30** have their rim-ends **30a** connected to the left flange portion **11B** and their hub-ends **30b** connected to a spoke connection site **22b** in the right groove **22e.**

As described above, in the wheel **100** according to the present embodiment, the hub-end (second end) **30b** of each wire spoke **30** is connected to the hub **20** in the second region **R2** of the hub **20.** In other words, each wire spoke **30** is disposed so as to extend from the rim **10** to the hub **20** and beyond the second imaginary line **L2.** Thus, the wire spokes **30** can be made longer than conventional, whereby energy absorption by the wire spokes **30** increases, thus resulting in an improved shock absorption. Therefore, a straddled vehicle including the wheel **100** according to the present embodiment provides better riding comfort on poor terrain and uneven road surfaces. As energy absorption increases, the input occurring at the fastening site of each wire spoke **30** decreases, which reduces loosening of the fastening site and reduces the frequency of maintenance.

As the wire spokes **30** become longer, energy absorption increases and shock absorption improves. When the length of each wire spoke **30** is 60% or more of the rim diameter, a sufficiently high shock absorption can be obtained. As used herein, the rim diameter is the nominal diameter of the rim as specified in various industrial standards.

Now, the fact that the above-described configuration provides an increased energy absorption will be described more specifically. Herein, a comparison will be made between Example 1, which does not employ the above configuration (i.e., the hub-end **30b** of each wire spoke **30** is connected to the hub **20** in the first region **R1** of the hub **20)** and Example 2, which employs the above configuration (i.e., the hub-end **30b** of each wire spoke **30** is connected to the hub **20** in the second region **R2** of the hub **20).** The specifications of Examples 1 and 2 are as indicated in Table 1 below.

**[Table 1]**

| | Example 1 | Example 2 |
|---|---|---|
| number of spokes | 32 | 32 |
| spoke diameter [mm] | 4.0 | 4.0 |
| spoke length [mm] | 200 | 300 |
| rim diameter [Inch] | 17 | 17 |
| (spoke length /rim diameter)×100[%] | 46 | 69 |

FIG. **10** is a graph showing a relationship (load-displacement curve) between the load acting on each wire spoke and the displacement of the wire spoke, with respect to Examples 1 and 2. The area of the region enclosed by each load-displacement curve corresponds to energy absorption. Herein, it is assumed that each wire spoke breaks (i.e., the load equals zero) at a certain load F.

The spoke length is different between Example 1 and Example 2. Specifically, the spoke length in Example 1 is 200 mm, whereas the spoke length in Example 2 is 300 mm. As a result, in Example 2, when breaking occurs, a greater displacement is incurred (specifically, 1.5 times greater) than in Example 1. Accordingly, the energy absorption E2 in Example 2 is 1.5 times greater than the energy absorption E1 in Example 1 (i.e., E1:E2=1:1.5).

Thus, by adopting the configuration where the hub-end (second end) **30b** of each wire spoke **30** is connected to the hub **20** in the second region **R2** of the hub **20,** energy absorption by the wire spokes **30** can be increased and shock absorption can be improved.

As illustrated in the present embodiment, given the structure of the hub **20** which includes the inner cylindrical portion **21** and the outer cylindrical portion **22** (hollow structure), adopting the configuration where each wire spoke **30** penetrates the interior of the hub **20** from a portion (spoke introduction site **22a)** to another portion (spoke connection site **22b)** of the outer cylindrical portion **22** of the hub **20** allows the hub-end **30b** of the wire spoke **30** to be connected to the hub **30** in the second region **R2.**

FIG. **9** shows an example where the cover member **50** and the head **42** of the nipple **40** covered by the cover member **50** are spaced apart by a predetermined interval **s.** Preferably, the interval s between the cover member **50** and the head **42** of the nipple **40** is set so that the engagement between the nipple **40** and the corresponding wire spoke **30** is not lost (i.e., so that the head **42** of the nipple **40** will abut with the inner peripheral surface **50a** of the cover member **50** before the engagement is lost) . This makes it even less likely for the nipples **40** to fall off. Moreover, the interval **s** between the cover member **50** and the head **42** of the nipple **40** may be zero, that is, the cover member **50** may be in contact with the head **42** of the nipple **40.**

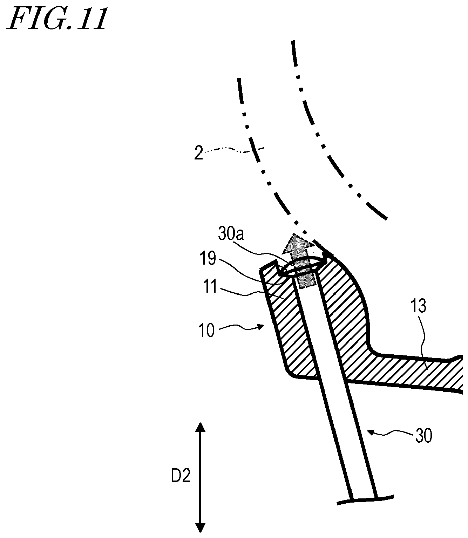

In the configuration illustrated in FIG. **1** and the like, the rim-ends **30a** of the wire spokes **30** are secured to the flange portions **11** of the rim **10** via the spoke heads **30h.** In this configuration, when a nipple **40** loosens, as shown in FIG. **11****,** the wire spoke **30** may move toward the outer side along the wheel radius direction **D2.** In that case, however, the rim-end **30a** of the wire spoke **30** will abut against the tire **2,** so that the wire spoke **30** will not drop to the outer side.

Thus, because the wire spoke **30** may move toward the outer side, setting of the interval **s** between the cover member **50** and the head **42** of the nipple **40** is preferably made so that the engagement between the nipple **40** and the corresponding wire spoke **30** is not lost while also taking the margin of movement of the wire spoke **30** to the outer side into consideration.

Although the present embodiment illustrates an example where the grooves **22e** and **22f** are formed in the outer peripheral surface of the outer cylindrical portion **22** of the hub **20,** the groove **22e** and/or the groove **22f** may not be formed in the outer peripheral surface of the outer cylindrical portion **22.**

### (Embodiment 2)

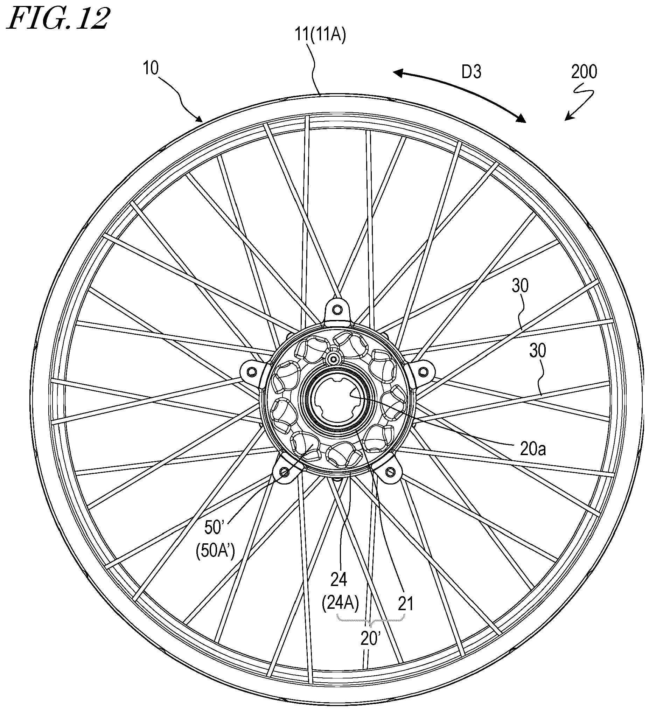

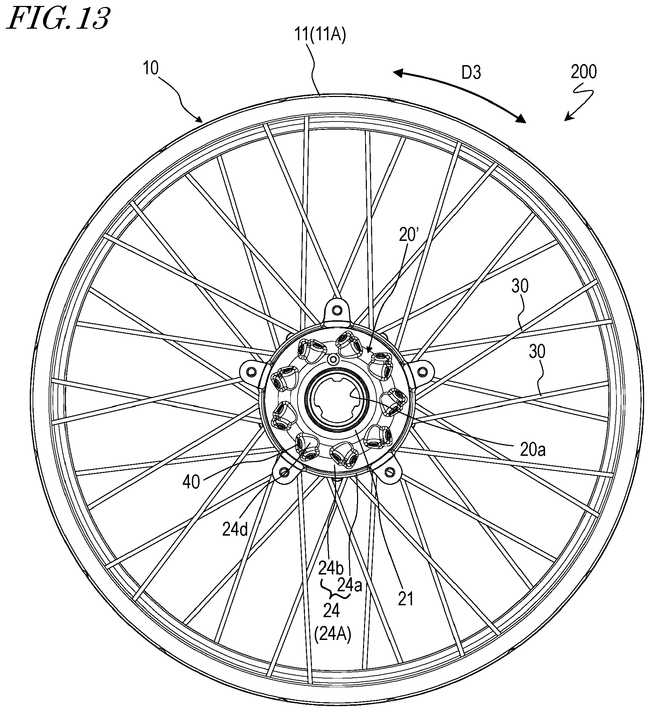

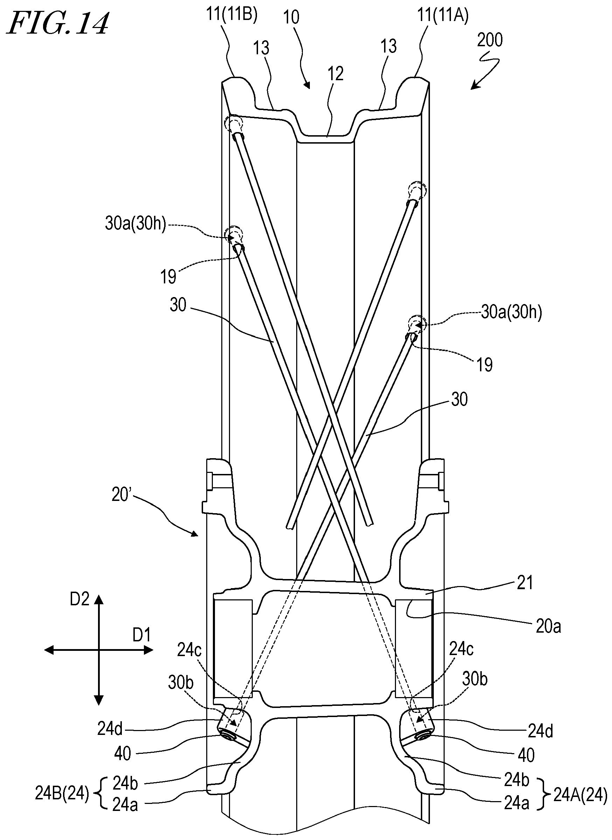

With reference to FIG. **12****,** FIG. **13****,** and FIG. **14****,** a wheel **200** according to the present embodiment will be described. FIG. **12** and FIG. **13** are side views schematically showing the wheel **200.** FIG. **14** is a cross-sectional view schematically showing the wheel **200,** illustrating a cross section that is parallel to the wheel axis direction **D1** and the wheel radius direction **D2.**

As shown in FIG. **12****,** FIG. **13****,** and FIG. **14****,** the wheel **200** includes a rim **10,** a hub **20',** and a plurality of wire spokes **30.** Moreover, the wheel **200** includes a plurality of nipples **40** and at least one (e.g., two herein) cover member(s) **50'.** FIG. **13** and FIG. **14** illustrate a state where the cover members **50'** have been removed.

The hub **20'** of the wheel **200** according to the present embodiment lacks the hollow structure of the hub **20** of the wheel **100** according to Embodiment 1. The hub **20'** includes an inner cylindrical portion **21** and a pair of flange portions **24.**

The inner cylindrical portion **21** is a barrel-shaped portion defining a wheel-shaft insertion hole **20a.** The pair of flange portions **24** are portions extending outward along the wheel radius direction **D2** from the inner cylindrical portion **21.** The pair of flange portions **24** include a right flange portion **24A** located on the right side and a left flange portion **24B** located on the left side. Each of the right flange portion **24A** and the left flange portion **24B** includes a subportion (hereinafter referred to as the "outer peripheral subportion") **24a** defining the outer periphery of the flange portion **24** and a subportion (hereinafter referred to as the "inner subportion") **24b** located inward of the outer peripheral subportion **24a** along the wheel radius direction **D2,** and presents a dish shape in the illustrated example.

Each of the plurality of nipples **40** fastens the hub-end **30b** of the corresponding wire spoke **30** to the hub **20'.** As shown in FIG. **14****,** a plurality of bosses **24d** are provided on the inner subportion **24b** of each flange portion **24,** with a nipple hole **24c** being provided (through which the stem **41** of a nipple **40** is inserted). The hub-ends **30b** of the wire spokes **30** are fastened to the flange portions **24** of the hub **20'** by the nipples **40.**

The cover members **50'** are attached to the hub **20.** In FIG. **12****,** between the two cover members **50',** only the cover member that is located on the right side (right cover member) **50A'** is shown, while the cover member that is located on the left side (left cover member) is not shown.

The right cover member **50A'** covers the heads **42** of some of the plurality of nipples **40** (specifically, a half of the nipples **40).** The left cover member (not shown) covers the heads **42** of the other nipples **40.**

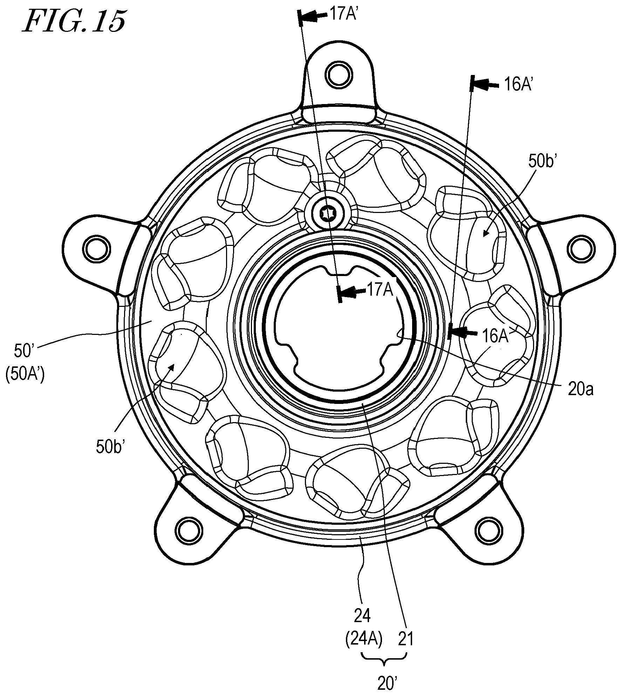

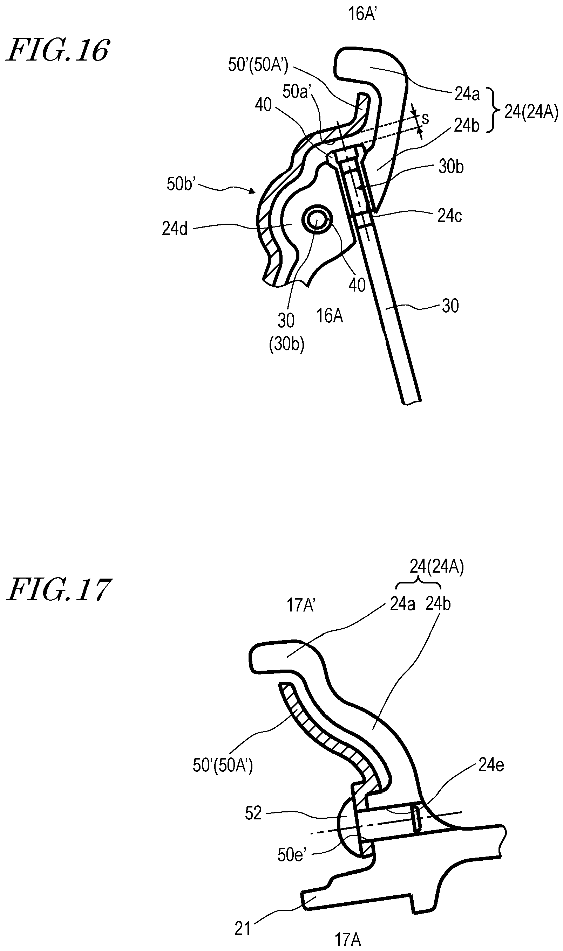

Hereinafter, with reference also to FIG. **15****,** FIG. **16,** and FIG. **17****,** the cover members **50'** will be described. FIG. **15** is a side view showing the neighborhood of the hub **20'** of the wheel **200.** FIG. **16** and FIG. **17** are cross-sectional views along line **16A-16A'** and line **17A-17A',** respectively, in FIG. **15****.**

As shown in FIG. **15****,** each cover member **50'** has a disk shape. In the illustrated example, each cover member **50'** includes a plurality of protrusions **50b'** corresponding to the plurality of bosses **24d** of the flange portions **24.** The cover members **50'** are made of a resin material, for example. The right cover member **50A'** is attached to the right flange portion **24A** of the hub **20',** while the left cover member (not shown) is attached to the left flange portion **24B** of the hub **20'.**

In each cover member **50'** and each flange portion **24,** bolt holes **50e'** and **24e** are formed, respectively, as shown in FIG. **17****,** for example. The cover member **50'** is attached to the flange portion **24** with a bolt **52.** Note that the manner of attachment of the cover member **50'** to the flange portion **24** is not limited to fastening with a bolt **52.** As shown in FIG. **15** and FIG. **16****,** the cover member **50'** covers the heads **42** of the nipples **40.**

As described above, in the wheel **200** according to the present embodiment, the hub-end **30b** of each wire spoke **30** is fastened to the hub **20'** via a nipple **40.** Because the wheel **200** according to the present embodiment includes the cover members **50'** being attached to the hub **20'** and covering the heads **42** of the nipples **40,** the nipples **40** are unlikely to fall off even when the nipples **40** become loose.

Moreover, the cover member(s) **50'** being attached to the hub **20'** can provide for improved design. The specific shape of cover member(s) **50'** is not limited to what is illustrated in FIG. **15** and the like, there is no particular limitation as to the thickness, shape, etc., of the cover member(s) **50'.**

FIG. **16** shows an example where the cover member **50'** and the head **42** of the nipple **40** covered by the cover member **50'** are spaced apart by a predetermined interval **s.** The interval **s** between the cover member **50'** and the head **42** of the nipple **40** is preferably set so that the engagement between the nipple **40** and the corresponding wire spoke **30** is not lost (i.e., the head **42** of the nipple **40** will abut with an inner surface **50a'** of the cover member **50'** before the engagement is lost). This makes it even less likely for the nipples **40** to fall off. Moreover, the interval **s** between the cover member **50'** and the head **42** of the nipple **40** may be zero, that is, the cover member **50'** may be in contact with the head **42** of the nipple **40.**

Moreover, as has been described with reference to FIG. **11****,** because the wire spoke **30** may move toward the outer side along wheel radius direction **D2,** setting of the interval **s** between the cover member **50'** and the head **42** of the nipple **40** is preferably made so that the engagement between the nipple **40** and the corresponding wire spoke **30** is not lost while also taking the margin of movement of the wire spoke **30** to the outer side into consideration.

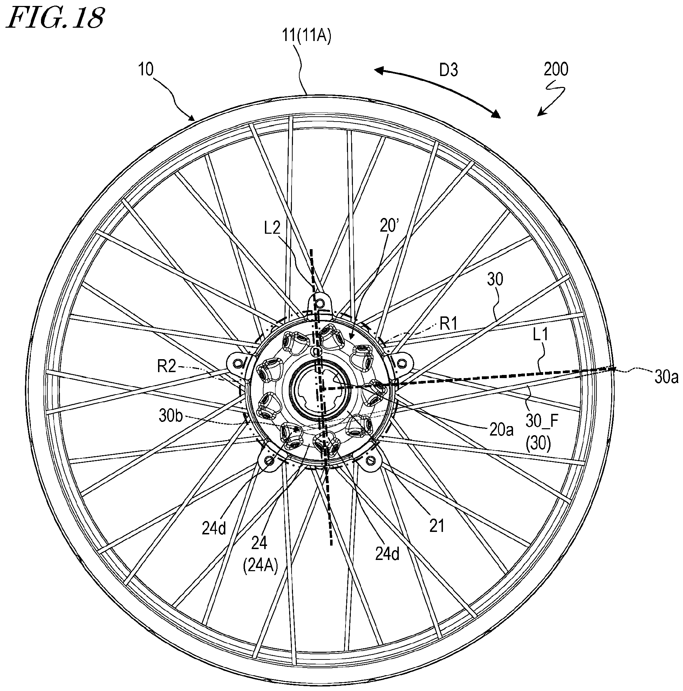

Similarly to the wheel **100** according to Embodiment 1, the wheel **200** according to the present embodiment has a configuration that allows the wire spokes **30** to be longer than conventional. FIG. **18** shows a side of the wheel **200** in a plan view drawn with particular attention to a certain wire spoke **30** (i.e., a wire spoke denoted as **"30_F"** in FIG. **18****).**

As has been described with respect to the wheel **100** according to Embodiment 1, the following is assumed: an imaginary line **L1** connecting the rim-end **30a** of the wire spoke **30** and the center of the wheel-shaft insertion hole **20a** defines a "first imaginary line"; an imaginary line **L2** being orthogonal to the first imaginary line **L1** and passing through the center of the wheel-shaft insertion hole **20a** defines a "second imaginary line"; and the second imaginary line **L2** divides the hub **20'** into two regions **R1** and **R2.** It is further assumed that one **R1** of the two regions **R1** and **R2** that is located closer to the rim-end **30a** of the wire spoke **30** of interest defines a "first region" and that the other region **R2** defines a "second region".

As shown in FIG. **18****,** in the wheel **200** according to the present embodiment, too, the hub-end **30b** of each wire spoke **30** is connected to the hub **20'** in the second region **R2** of the hub **20'.** More specifically, the hub-end **30b** of each wire spoke **30** is connected to the hub **20'** at the inner subportion **24b** of the flange portion **24.**

When viewed in a plan view from the wheel axis direction **D1,** each wire spoke **30** extends from its rim-end **30a** to its hub-end **30b,** so as to pass inward of the hub-end **30b** of at least another wire spoke **30** (i.e., inward along the wheel radius direction **D2**)**.** For example, the wire spoke **30_F** of particular interest in FIG. **18** extends so as to pass inward of another boss **24d** (i.e., a boss **24d** located at the boundary between the first region **R1** and the second region **R2)** that is located to the right of the boss **24d** to which the hub-end **30b** of the wire spoke **30_F** is connected.

A half of the plurality of wire spokes **30** have their rim-ends **30a** connected to the right flange portion **11A** of the rim **10** and their hub-ends **30b** connected to the left flange portion **24B** of the hub **20'.** The other half of the wire spokes **30** have their rim-ends **30a** connected to the left flange portion **11B** of the rim **10** and their hub-ends **30b** connected to the right flange portion **24A** of the hub **20'.**

As described above, in the wheel **200** according to the present embodiment, too, the hub-end **30b** of each wire spoke **30** is connected to the hub **20'** in the second region **R2** of the hub **20'.** In other words, each wire spoke **30** is disposed so as to extend from the rim **10** to the hub **20'** and beyond the second imaginary line **L2.** Thus, the wire spokes **30** can be made longer than conventional, whereby energy absorption by the wire spokes **30** increases, thus resulting in an improved shock absorption. Therefore, a straddled vehicle including the wheel **200** according to the present embodiment provides better riding comfort on poor terrain and uneven road surfaces. As energy absorption increases, the input occurring at the fastening site of each wire spoke **30** decreases, which reduces loosening of the fastening site and reduces the frequency of maintenance.

As illustrated in the present embodiment, given the structure of the hub **20'** which includes the inner cylindrical portion **21** and the pair of flange portions **24,** adopting the configuration where, e.g., the hub-end **30b** of each wire spoke **30** is connected to the hub **20'** at the inner subportion **24b** of the flange portion **24** allows the hub-end **30b** of the wire spoke **30** to be connected to the hub **20'** in the second region **R2.**

Although the description of Embodiments 1 and 2 has illustrated a configuration in which the hub-end **30b** of each wire spoke **30** is connected to the hub **20, 20'** in the second region **R2** of the hub **20, 20',** embodiments of the present invention are not limited to such a configuration. The hub-end **30b** of each wire spoke **30** may be connected to the hub **20, 20'** in the first region **R1** of the hub **20, 20'.**

As described above, a wire-spoke wheel **100, 200** according to an embodiment of the present invention includes: an annular rim **10;** a hub **20, 20'** having a hole **20a** in which a wheel shaft is inserted; a plurality of wire spokes **30** linking the rim **10** and the hub **20, 20'** together, the plurality of wire spokes **30** each including a first end **30a** that is connected to the rim **10** and a second end **30b** that is connected to the hub **20, 20';** a plurality of nipples **40** respectively fastening the respective second ends **30b** of the plurality of wire spokes **30** to the hub **20, 20';** and a cover member **50, 50'** being attached to the hub **20, 20'** and covering a head **42** or heads **42** of at least a part of the plurality of nipples **40.**

In a wire-spoke wheel **100, 200** according to an embodiment of the present invention, the hub-end (second end) **30b** of each wire spoke **30** is fastened to the hub **20, 20'** via the nipple **40.** Because the wire-spoke wheel **100, 200** according to an embodiment of the present invention includes the cover member **50, 50'** being attached to the hub **20, 20'** and covering the heads **42** of the nipples **40,** the nipples **40** are unlikely to fall off even when the nipples **40** become loose. Moreover, the cover member **50, 50'** being attached to the hub **20, 20'** can provide for improved design.

In one embodiment, an interval **s** between the cover member **50, 50'** and a head **42** of the nipple **40** or each of the nipples **40** covered by the cover member **50, 50'** is set so that so that the engagement between the nipple **40** and the corresponding wire spoke **30** is not lost.

Because the interval **s** between the cover member **50, 50'** and the head **42** of each nipple **40** is set so that the engagement between the nipple **40** and the wire spoke **30** is not lost, it is even less likely for the nipples **40** to fall off. The interval **s** between the cover member **50, 50'** and the head **42** of the nipple **40** may be zero, that is, the cover member **50, 50'** may be in contact with the head **42** of the nipple **40.**

In one embodiment, in a plan view as viewed along the wheel axis direction **D1,** regarding each wire spoke **30,** an imaginary line **L1** connecting the first end **30a** of the wire spoke **30** and a center of the hole **20a** defines a first imaginary line; an imaginary line **L2** being orthogonal to the first imaginary line **L1** and passing through a center of the hole 20a defines a second imaginary line; and when the hub **20, 20'** is divided into two regions **R1** and **R2** by the second imaginary line **L2,** one **R1** of the two regions **R1** and **R2** that is located closer to the first end **30a** of the wire spoke **30** defines a first region and the other **R2** of the two regions **R1** and **R2** defines a second region, wherein the second end **30b** of the wire spoke **30** is connected to the hub **20, 20'** in the second region **R2** of the hub **20, 20'.**

A wire-spoke wheel **100, 200** according to an embodiment of the present invention may have a configuration that allows the wire spokes **30** to be longer than conventional. Specifically, in a plan view as viewed along the wheel axis direction **D1,** the following may be assumed regarding each wire spoke **30:** an imaginary line **L1** connecting the rim-end (first end) **30a** of the wire spoke **30** and the center of the hole (wheel-shaft insertion hole) **20a** in the hub **20, 20'** defines a first imaginary line; an imaginary line **L2** being orthogonal to the first imaginary line **L1** and passing through the center of the hole **20a** defines a second imaginary line; and the second imaginary line **L2** divides the hub **20, 20'** into two regions **R1, R2.** Herein, assuming that one **R1** of the two regions **R1** and **R2** that is located closer to the first end **30a** of the wire spoke **30** defines a first region and that the other region **R2** defines a second region, the hub-end (second end) **30b of** the wire spoke **30** may be connected to the hub **20, 20'** in the second region **R2** of the hub **20, 20'.**

Because of the wire-spoke wheel **100, 200** having such a configuration (i.e., each wire spoke **30** is disposed so as to extend from the rim **10** to the hub **20, 20'** and beyond the second imaginary line **L2),** the wire spokes **30** can be made longer than conventional, whereby energy absorption by the wire spokes **30** increases, thus resulting in an improved shock absorption. Therefore, a straddled vehicle including a wire-spoke wheel **100, 200** with such a configuration provides better riding comfort on poor terrain and uneven road surfaces. As energy absorption increases, the input occurring at the fastening site of each wire spoke **30** decreases, which reduces loosening of the fastening site and reduces the frequency of maintenance.

In one embodiment, each of the plurality of wire spokes **30** has a length which is 60% or more of the rim diameter.

When the length of each wire spoke is 60% or more of the rim diameter, a sufficiently high shock absorption can be obtained.

In one embodiment, the hub **20** includes an inner cylindrical portion **21** defining the hole **20a,** an outer cylindrical portion **22** being located outward of the inner cylindrical portion **21** along the wheel radius direction **D2** and surrounding the inner cylindrical portion **21,** and an interconnecting portion **23** connecting the inner cylindrical portion **21** and the outer cylindrical portion **22;** and each of the plurality of wire spokes **30** penetrates the interior of the hub **20** from a portion **22a** to another portion **22b** of the outer cylindrical portion **22** of the hub **20,** and is fastened to the hub **20** at the other portion **22b.**

Given the structure of the hub **20** which includes the inner cylindrical portion **21** and the outer cylindrical portion **22,** adopting the configuration where, e.g., each wire spoke **30** penetrates the interior of the hub **20** from a portion **22a** to another portion **22b** of the outer cylindrical portion **22** of the hub **20** allows the hub-end (second end) **30b** of the wire spoke **30** to be connected to the hub **20** in the second region **R2.**

In one embodiment, the cover member **50** is an annular band, and is attached to an outer peripheral surface of the outer cylindrical portion **22** of the hub **20.**

When adopting a configuration where each wire spoke **30** penetrates the interior of the hub **20,** the cover member **50** may be an annular band, for example, which may be attached to the outer peripheral surface of the outer cylindrical portion **22** of the hub **20.**

In one embodiment, the hub **20'** includes an inner cylindrical portion **21** defining the hole **20a** and a flange portion **24** extending outward along the wheel radius direction **D2** from the inner cylindrical portion **21;** the flange portion **24** includes an outer peripheral subportion **24a,** and an inner subportion **24b** that is located inward of the outer peripheral subportion **24a** along the wheel radius direction **D2;** and the second end **30b** or ends **30b** of at least a part of the plurality of wire spokes **30** is or are connected to the hub **20'** in the inner subportion **24b** of the flange portion **24.**

Given the structure of the hub **20'** which includes the inner cylindrical portion **21** and the flange portion **24,** adopting the configuration where, e.g., the second end **30b** of each wire spoke **30** is connected to the hub **20'** at the inner subportion **24b** of the flange portion **24** allows the hub-end (second end) **30b** of the wire spoke **30** to be connected to the hub **20'** in the second region **R2.**

In one embodiment, the cover member **50'** has a disk shape, and is attached to the flange portion **24** of the hub **20'.**

When the wire spokes **30** are fastened to the hub **20'** at the flange portion **24,** the cover member **50'** may have a disk shape, for example, which is attached to the flange portion **24** of the hub **20'.**

The cover member **50, 50'** may be made of a rubber or a resin material.

As the material of the cover member **50, 50',** a rubber or a resin material can be suitably used, for example.

According to an embodiment of the present invention, in a wire-spoke wheel having a configuration in which one end of each wire spoke is fastened to the hub side by a nipple, the nipple can be prevented from falling off. A wire-spoke wheel according to an embodiment of the present invention can be suitably used for various straddled vehicles such as motorcycles.

## Claims

1. A wire-spoke wheel (100) comprising:
an annular rim (10);
a hub (20, 20') having a hole (20a) in which a wheel shaft is inserted;
a plurality of wire spokes (30) linking the rim (10) and the hub (20, 20') together, the plurality of wire spokes (30) each including a first end (30a) that is connected to the rim (10) and a second end (30b) that is connected to the hub (20, 20');
a plurality of nipples (40) respectively fastening the respective second ends (30b) of the plurality of wire spokes (30) to the hub (20, 20'); and
a cover member (50, 50') being attached to the hub (20, 20') and covering a head or heads (42) of at least a part of the plurality of nipples (40).

2. The wire-spoke wheel of claim 1, wherein an interval (s) between the cover member (50) and a head (42) of the nipple (40) or each of the nipples (42) covered by the cover member (50) is set so that engagement between the nipple (40) and the corresponding wire spoke (30) is not lost.

3. The wire-spoke wheel of claim 1 or 2, wherein,
in a plan view as viewed along a wheel axis direction (D1), regarding each wire spoke (30),
an imaginary line (L1) connecting the first end (30a) of the wire spoke (30) and a center of the hole (20a) defines a first imaginary line (L1); an imaginary line (L2) being orthogonal to the first imaginary line (L1) and passing through a center of the hole (20a) defines a second imaginary line (L2); and when the hub (20) is divided into two regions (21, 22) by the second imaginary line (L2), one (R1) of the two regions (R1, R2) that is located closer to the first end (30a) of the wire spoke (30) defines a first region (R1) and the other (R2) of the two regions (R1, R2) defines a second region (R2), wherein
the second end (30b) of the wire spoke (30) is connected to the hub (20) in the second region (R2) of the hub (20) .

4. The wire-spoke wheel of claim 3, wherein each of the plurality of wire spokes (30) has a length which is 60% or more of the rim diameter.

5. The wire-spoke wheel of claim 3 or 4, wherein,
the hub (20) includes an inner cylindrical portion (21) defining the hole (20a), an outer cylindrical portion (22) being located outward of the inner cylindrical portion (21) along a wheel radius direction (D2) and surrounding the inner cylindrical portion (21), and an interconnecting portion (23) connecting the inner cylindrical portion (21) and the outer cylindrical portion (22); and
each of the plurality of wire spokes (30) penetrates an interior of the hub (20) from a portion (22a) to another portion (22b) of the outer cylindrical portion (21) of the hub (20), and is fastened to the hub (20) at the other portion.

6. The wire-spoke wheel of claim 5, wherein the cover member (50) is an annular band, and is attached to an outer peripheral surface of the outer cylindrical portion (22) of the hub (20).

7. The wire-spoke wheel of claim 3 or 4, wherein,
the hub (20') includes an inner cylindrical portion (21) defining the hole (20a) and a flange portion (24) extending outward along a wheel radius direction (D2) from the inner cylindrical portion (21);
the flange portion (24) includes an outer peripheral subportion (24a), and an inner subportion (24b) that is located inward of the outer peripheral subportion (24a) along the wheel radius direction (D2); and
the second end or ends (30b) of at least a part of the plurality of wire spokes (30) is or are connected to the hub (20') in the inner subportion (24b) of the flange portion (24) of the hub (20').

8. The wire-spoke wheel of claim 7, wherein the cover member has a disk shape, and is attached to the flange portion (24) of the hub (20').

9. The wire-spoke wheel of any of claims 1 to 8, wherein the cover member (50, 50') is made of a rubber or a resin material.
